# EUROPÄISCHE PATENTSCHRIFT

(11) **EP 3 725 439 B1**
(45) Veröffentlichungstag und Bekanntmachung des Hinweises auf die Patenterteilung: **30.07.2025**
(21) Anmeldenummer: 20169410.6
(22) Anmeldetag: 14.04.2020
(51) Int. Cl.: B22F 9/08, C22C 33/04, B22F 1/00, C22C 1/02, C22C 1/04

(54) **HERSTELLUNG EINES METALL-PULVERS EINER ALUMINIUMLEGIERUNG ZUR VERWENDUNG ALS WERKSTOFF IN DER ADDITIVEN FERTIGUNG**
PRODUCTION OF A METAL POWDER OF AN ALUMINIUM ALLOY FOR USE AS A MATERIAL IN ADDITIVE PRODUCTION
FABRICATION D'UNE POUDRE MÉTALLIQUE D'UN ALLIAGE D'ALUMINIUM DESTINÉE À L'UTILISATION EN TANT QUE MATIÈRE DANS LA FABRICATION ADDITIVE

(30) Priorität: 15.04.2019 AT 503402019
(43) Veröffentlichungstag der Anmeldung: 21.10.2020
(73) Patentinhaber: Rimmer, Karl, 9231 Köstenberg (AT)
(72) Erfinder: Rimmer, Karl, 9231 Köstenberg (AT)
(74) Vertreter: KLIMENT & HENHAPEL

(56) Entgegenhaltungen:
- EP-A1- 2 689 873
- CN-A- 106 735 272
- CN-A- 109 047 783
- FR-A1- 3 051 699

## Beschreibung

### GEBIET DER ERFINDUNG

Die vorliegende Erfindung betrifft ein Verfahren zur Herstellung eines Metall-Pulvers einer Aluminiumlegierung zur Verwendung als Werkstoff in der Additiven Fertigung, wobei das Pulver der Aluminiumlegierung hergestellt wird aus Aluminium oder einer bereits bestehenden Aluminiumlegierung und mindestens einem weiteren Metall, sowie eine entsprechende Vorrichtung zur Herstellung des Metall-Pulvers.

### STAND DER TECHNIK

In der Additiven Fertigung wird schichtweise Metall-Pulver aufgetragen oder direkt aufgesprüht, um dadurch kostengünstig und schnell zwei- und dreidimensionale Gegenstände zu erzeugen.

Im 3D Druck werden - grob zusammengefasst - sogenannte Pulverbett-basierte Verfahren, Extrusions-basierte Verfahren sowie Auftragsverfahren unterschieden.

Bei der Herstellung eines Werkstücks aus festen Werkstoffen nach einem Pulverbett-basierten Verfahren wird zunächst eine dünne Pulverschicht aufgetragen und diese anschließend aufgeschmolzen. Auf die Schmelze wird erneut Pulver aufgetragen und der Werkstoff anschließend wieder aufgeschmolzen, wodurch er sich mit der darunter liegenden Schicht verbindet etc. Durch gezieltes Aufbringen des Pulvers werden damit die gewünschten dreidimensionalen Strukturen geschaffen.

Im Extrusions-basierten Verfahren wird zunächst Metallpulver mit einem Bindemittel vermischt und dieses Gemisch wird dann wie gewünscht ausgebracht. Im Anschluss wird dieses in einem Ofen erhitzt, wobei der Binder ausgebrannt und das Metall gesintert wird, wodurch man die gewünschten dreidimensionalen Strukturen erhält.

Bei Auftragsverfahren werden Metallpulver direkt beim Auftragen mittels Laser aufgeschmolzen und dann weiter verarbeitet, um die gewünschten dreidimensionalen Strukturen zu erhalten.

Prinzipiell erfolgt die Fertigung der Metall-Pulver zur Verwendung als Werkstoff in der Additiven Fertigung weitgehend automatisiert unter Einsatz von flüssigen oder festen Werkstoffen in Form von Barren und/oder Halbzeug in Form von Drähten, Stangen, Granalien oder Metallpulver aus dem Sekundärkreislauf (Recycling von gebauchten Metallpulvern).

Zur mechanischen Herstellung von Metall-Pulvern, die als Werkstoff in der Additiven Fertigung verwendet werden, besteht die Möglichkeit, diese entweder durch Mahlen von Metall/en oder durch Verdüsen bzw. Zerstäuben von flüssigen Schmelzen und durch Versprühen mit Plasma- oder Gasbrenner sowie durch induktives Aufschmelzen und Versprühen, herzustellen.

Aus der EP 2689873 ist ein Verfahren zur Herstellung von korrosionsschützenden Pigmenten bzw. eines Pulvers für den Einsatz als Pigmente eines Korrosionsschutz-Primers mittels Zerstäubens einer flüssigen Metallschmelze bekannt. Bevorzugt werden diese Pigmente in Form eines Korrosionsschutz-Primers herangezogen.

Die FR 3 051 699 A1 betrifft eine Vorrichtung zum Herstellen von metallischen Partikeln durch Zerstäubung und chemische Gasphasenabscheidung.

Die CN 109 047 783A betrifft die Herstellung einer Aluminiumlegierung, wobei reine Aluminiumbarren in einem Tiegel geschmolzen werden. Die einzelnen Verfahrensschritte laufen dabei jeweils in ein und demselben Schmelzofen ab.

Die EP 2 689 873 A1 betrifft ein Verfahren zur Herstellung von korrosionsschützenden Pigmenten.

Die CN 106 735 272 A offenbart ein Verfahren zum Zerstäuben einer Schmelze mittels einer Düse.

### AUFGABE DER ERFINDUNG

Aufgabe der vorliegenden Erfindung ist es, ein Herstellungsverfahren für Metall-Pulver zur Verwendung als Werkstoff in der Additiven Fertigung zur Verfügung zu stellen. Insbesondere sollen die Körner des Metall-Pulvers eine möglichst definierte Größenverteilung aufweisen. Dadurch soll sich das Pulver besonders als Werkstoff in der Additiven Fertigung eignen.

### DARSTELLUNG DER ERFINDUNG

Erfindungsgemäß lässt sich ein Metall-Pulver zur Verwendung als Werkstoff in der Additiven Fertigung besonders effizient herstellen, indem Tröpfchen einer geschmolzenen Aluminiumlegierung erzeugt werden. Die Tröpfchen werden abgekühlt und erstarren, sodass ein Metall-Pulver gebildet wird. Die Körner des Metall-Pulvers können als Werkstoff in der Additiven Fertigung eingesetzt werden.

Durch die Erzeugung von Tröpfchen lässt sich insbesondere eine definierte Größenverteilung der Tröpfchen bzw. in der Folge der Metall-Pulverkörner erreichen.

Die definierte Größenverteilung der Tröpfchen lässt sich durch Vergasen bzw. Zerstäuben der Aluminiumlegierungsschmelze unter Verwendung eines Primärgases und gegebenenfalls eines Sekundärgases erzielen.

Insbesondere für die Anwendung eines Metall-Pulvers einer Aluminiumlegierung zur Additiven Fertigung in sensiblen Bereichen, wie der Flugzeug- oder Automobilindustrie oder anderen metallverarbeitenden Industrien, ist es notwendig, eine besonders regelmäßige und damit vorteilhafte Kornbildung des Metall-Pulvers einer Aluminiumlegierung zu erreichen.

Erfindungsgemäß ist daher vorgesehen, dass das Metall-Pulver einer Aluminiumlegierung zur Verwendung als Werkstoff in der Additiven Fertigung hergestellt wird aus Aluminium oder aus einer bestehenden Aluminiumlegierung einerseits und mindestens einem weiteren Metall andererseits, und erfindungsgemäß ist weiter vorgesehen, dass das Herstellungsverfahren des Metall-Pulvers der Aluminiumlegierung folgende Schritte umfasst:
- Schmelzen und Legieren des Aluminiums oder der bereits bestehenden Aluminiumlegierung mit dem mindestens einen weiteren Metall in einem Schmelzofen in einer zweiten Ofenkammer, wobei die Temperatur der Schmelze 500°C bis 1400°C, vorzugsweise 1100°C bis 1200°C, besonders bevorzugt etwa 1150°C, beträgt, wobei die Schmelze von der zweiten gasdichten Ofenkammer in eine erste gasdichte Ofenkammer umfassend einen beheizten Tundish überführt wird, wobei vor dem Zerstäuben der Schmelze das mindestens eine weitere Metall durch eine Zufuhrschleuse der Schmelze in der ersten gasdichten Ofenkammer und gegebenenfalls der Schmelze in der zweiten gasdichten Ofenkammer zugeführt wird;
- Zerstäuben der Schmelze mittels eines Primärgases, welches ein inertes Gas ist und einen ersten Gasfluss aufweist, und wobei das Primärgas auf 100°C bis 450°C vorgewärmt wird;
- Kühlen der Schmelze während des Zerstäubens und Erstarrens des Metall-Pulvers, wobei ein Materialfluss während des Zerstäubens und Erstarrens in einem Sprühturm verläuft, und wobei die Schmelze unmittelbar vor dem Zerstäuben in den beheizten Tundish eingebracht wird, wobei der Tundish an einem unteren Ende eine Sprühdüse sowie mindestens eine Zuführungsleitung für das Primärgas aufweist, sodass die Aufheizung des Primärgases zusätzlich durch Wärmekontakt mit dem beheizten Tundish oder dessen Sprühdüse erfolgt.

Durch das Vorwärmen des Primärgases und gegebenenfalls eines Sekundärgases durch den beheizten Tundish können für das Zerstäuben günstige Temperaturen der Schmelze garantiert und entsprechend angepasst werden, wobei ein beheizter (Verdüsungs-) Tiegel bzw. beheizter Tundish verwendet werden kann, an dessen unterem Ende ein Düsensystem für das Zerstäuben sowie Zuführungsleitungen für das Primärgas und gegebenenfalls das Sekundärgas vorgesehen sind. Hierbei ist die Sprühdüse vorzugsweise ebenfalls beheizt. Zusätzlich kann die Vorwärmung des Primär- und gegebenenfalls eines Sekundärgasstroms über einen Wärmetauscher und/oder ähnliche Wärmenergiezufuhraggregate erfolgen.

Um besonders effektiv die Metalltröpfchenerzeugung steuern zu können, ist in einer Ausführungsform der Erfindung vorgesehen, dass das Zerstäuben der Schmelze zusätzlich zum Primärgas mittels eines Sekundärgases, welches ein inertes Gas ist und einen zweiten Gasfluss aufweist, erfolgt und wobei das Sekundärgas auf 100°C bis 450°C vorgewärmt wird, wobei die Aufheizung des Sekundärgases zusätzlich durch Wärmekontakt mit dem beheizten Tundish oder dessen Sprühdüse erfolgt, und dass als Primärgas und als Sekundärgas ein inertes Gas vorzugsweise umfassend N₂ und/oder H und/oder He und/oder Ne und/oder Ar und/oder Kr und/oder Xe und/oder Rn, verwendet wird, um Oxidation zu unterbinden. Die Verwendung eines Primärgases und eines Sekundärgases ermöglicht eine noch präzisere Erzeugung der gewünschten Metall-Pulverkörner, da die Zerstäubung der Metallschmelze damit auch mit mehr als einem Gas erfolgen kann. Dies ermöglicht ein präziseres Zerstäuben der Metallschmelze.

Grundsätzlich ist bei der Zerstäubung (bzw. Verdüsung oder Vergasung) auf eine mögliche Oxidation - an der Oberfläche - und im Inneren des Metallpulvers von Legierungselementen der Schmelze zu achten. Meist ist eine solche Oxidation nicht erwünscht bzw. wird ein bestimmter Sauerstoffgehalt definiert vorgegeben, weshalb vorzugsweise eines der oben genannten Inertgase als Primärgas und/oder Sekundärgas verwendet wird. Um besonders günstige Ergebnisse bei der Metallpulvererzeugung erreichen zu können und Oxidationen während des Zerstäubungs- und Erstarrungsprozesses verhindern zu können, ist in einer Ausführungsform der Erfindung vorgesehen, dass als Primärgas und gegebenenfalls als Sekundärgas ein inertes Gas verwendet wird, vorzugsweise umfassend N₂ und/oder H und/oder He und/oder Ne und/oder Ar und/oder Kr und/oder Xe und/oder Rn, um Oxidation zu unterbinden.

Mit anderen Worten ausgedrückt, kann die Verdüsung bzw. das Zerstäuben der Schmelze entweder nur mit Primärgas, oder mit Primärgas und Sekundärgas erfolgen. Dies ermöglicht eine besonders gute Steuerung der Metalltröpfchen- und damit der Metallpulvererzeugung.

Besonders einfach und effizient - und damit kostengünstig - lassen sich die Metalltröpfchen erzeugen, indem das Vergasen bzw. Zerstäuben so erfolgt, dass der Materialfluss der Schwerkraft folgt, also mit einem Richtungsanteil, der senkrecht von oben nach unten weist. Je größer dieser Richtungsanteil (senkrecht von oben nach unten) des Materialflusses ausfällt, desto effizienter ist die Metalltröpfchenerzeugung. Daher ist es bei einer bevorzugten Ausführungsform des erfindungsgemäßen Verfahrens vorgesehen, dass der Materialfluss der Schwerkraft folgt.

Es ist vorgesehen, dass der Materialfluss während des Zerstäubens und Erstarrens in einem gekühlten Sprühturm verläuft, um ein Erstarren der Metalltröpfchen zu Körnern des Metall-Pulvers zu begünstigen. Die Kühlung des Sprühturms kann dabei mittels Wasser oder Gasen, wie zum Beispiel N₂, H₂, CO, CO₂, H₂O, He, Ar, Kr, Xe oder einem Gemisch davon, erfolgen. Selbstverständlich sind andere Gase davon nicht ausgeschlossen, wenn sie zur Kühlung des erfindungsgemäßen Sprühturms geeignet sind.

Unter Kühlung des Sprühturms wird einerseits ein indirektes und andererseits ein direktes Kühlen der Schmelze verstanden. Indirektes Kühlen der Schmelzen beim Zerstäuben bedeutet, dass die Wand des Sprühturms mit im Wandinneren geführtem Wasser oder Kühlgas gekühlt wird, wodurch die Temperatur im Inneren des Sprühturms naturgemäß vermindert werden kann. In diesem Fall kann die Wand des Sprühturms beispielsweise einen Doppelmantel aufweisen, der eine Kühlung des Sprühturms ermöglicht. Selbstverständlich schließt dies andere Verfahren zur Kühlung des Sprühturms nicht aus.

Direktes Kühlen des Sprühturms erfolgt mittels Kühlgas, welches in den Sprühturm zugeführt wird. Diesen Falls kommt das Kühlgas dann in direkten Kontakt mit den zerstäubten Metalltröpfchen der Schmelze, wodurch diese rascher gekühlt werden und zu Pulverkörnern erstarren. Dies ermöglicht eine präzisere Erzeugung von Metall-Pulver-Körnern wie sie für die Verwendung in der Additiven Fertigung benötigt werden.

Um eine Oxidation der Aluminiumlegierung zu verhindern, ist - wie oben bereits erwähnt - es vorzugsweise vorgesehen, dass es sich bei dem Kühlgas um ein inertes bzw. möglichst inertes Gas handelt.

Um eine besonders geeignete Aluminiumlegierung zur Verwendung als Werkstoff in der Additiven Fertigung zu erhalten, ist gemäß der Erfindung vorgesehen, dass vor dem Zerstäuben der Schmelze das mindestens eine weitere Metall durch eine Zufuhrschleuse der Schmelze in der ersten gasdichten Ofenkammer und gegebenenfalls der Schmelze in der zweiten gasdichten Ofenkammer zugeführt wird, wobei es sich bei dem mindestens einen weiteren Metall vorzugsweise um Si und/oder Mg und/oder Mn und/oder Cu und/oder Zr und/oder Sc und/oder B und/oder Nb und/oder Ta und/oder V und/oder W und/oder Li handelt, um eine Aluminiumlegierung mit den geeignetsten Eigenschaften zur Verwendung als Werkstoff in der Additiven Fertigung zu erhalten.

Durch das mehrfache Zuführen des mindestens einen weiteren Metalls wird es ermöglicht, möglichst geeignete Aluminiumlegierungen herzustellen, da jederzeit eine Veränderung der Legierungszusammensetzung ermöglicht wird. Dies ermöglicht auch ein nachträgliches Modifizieren der Schmelze.

Da Oxidationen die Qualität der Schmelze und damit des daraus erzeugten Metallpulvers mindern, ist in einer Ausführungsform der Erfindung vorgesehen, dass eine Schleusenkammer zur Entfernung bzw. Minimierung des vorhandenen Sauerstoffs aus dem Aluminium oder der bestehenden Aluminiumlegierung vorgesehen ist, um Oxidationen während des Schmelzens und Legierens zu vermeiden, wobei vorgesehen ist, dass die Schleusenkammer mit mindestens einem Inertgas gespült wird.

Die Schleusenkammer ermöglicht es, das zugeführte Aluminium bzw. die bereits bestehende Aluminiumlegierung von vorhandenem Luftsauerstoff zu befreien. Es ist hierfür vorgesehen, dass die Schleusenkammer eine erstes und ein zweites Schleusentor umfasst, deren Funktion im Stand der Technik hinreichend bekannt ist, so dass naturgemäß entweder nur das zweite Schleusentor zur Ofenkammer hin oder nur das erste Schleusentor am Eingang der Schleusenkammer geöffnet werden kann, um zu verhindern, dass Sauerstoff unerwünschter Weise in die Ofenkammer gelangt. Es ist dabei vorgesehen, dass die Schleusenkammer mit Inertgas gespült wird, um den Luftsauerstoff aus der Schleusenkammer zu entfernen. Um Inertgas zuführen zu können und Sauerstoffenthaltendes Gas abführen zu können, ist erfindungsgemäß vorgesehen, dass die Schleusenkammer eine Gaszufuhrleitung und eine Gasabführleitung umfasst.

Des Weiteren ist vorgesehen, dass die Schleusenkammer eine Vakuumpumpe umfasst, mit deren Hilfe Gas aus der Schleusenkammer entfernt werden kann, entweder Inertgas, welches mit Luftsauerstoff verunreinigt ist, oder Umgebungsluft vor der Zugabe von Inertgas.

Selbstverständlich ist nicht ausgeschlossen, dass die Schleusenkammer auch dazu dient, den Sauerstoff auf eine gewünschte Menge zu minimieren, aber nicht vollständig zu entfernen.

Um das Risiko von unerwünschten Oxidationen während der Herstellung des Metall-Pulvers einer Aluminiumlegierung weiter zu vermindern, ist in einer Ausführungsform der Erfindung vorgesehen, dass die Herstellung des Metall-Pulvers einer Aluminiumlegierung in einer inerten Schutzatmosphäre umfassend mindestens ein Inertgas erfolgt, wobei vorgesehen ist, dass Inertgas in der Schleusenkammer und/oder der ersten gasdichten Ofenkammer und/oder der zweiten gasdichten Ofenkammer und/oder der Zufuhrschleuse zugeführt wird. Dadurch, dass in allen Kammern, in denen sich die Schmelze befinden kann, vorgesehen sein kann, dass es sich um eine Kammer umfassend eine Inertgasatmosphäre handelt, kann die Gefahr der Oxidationen weiter verringert werden bzw. Oxidationen nur gezielt zugelassen werden, sofern dies gewünscht wird.

Als für das Zerstäuben der Schmelze günstig hat sich eine Temperatur der Schmelze in einem Bereich von 500°C bis 1400°C, vorzugsweise von 1100°C bis 1200°C, besonders bevorzugt von etwa 1150°C erwiesen.

Neben der Temperatur der Schmelze spielen für das definierte Zerstäuben die Temperaturen des Primärgases und/oder des Sekundärgases eine wichtige Rolle. Beste Ergebnisse lassen sich erzielen, wenn sowohl das Primärgas als auch das Sekundärgas eine Temperatur in einem Bereich von 250°C bis 600°C, vorzugsweise von 350°C bis 450°C aufweisen. Hierdurch wird ein zu schnelles Erstarren verhindert, wobei die Temperaturen des Primärgases und des Sekundärgases auch unterschiedlich ausfallen können. Die Aufheizung des Primärgases und des Sekundärgases kann dabei durch die Zuführung der Gase zum beheizten Tundish bzw. zu dessen Düsensystem erfolgen, d.h. durch Wärmekontakt mit dem beheizten Tundish bzw. dessen Düsensystem. Unterschiedliche Gastemperaturen können sich entsprechend durch unterschiedliche Strömungsgeschwindigkeiten der Gase bzw. unterschiedliche Gasflüsse aufgrund des unterschiedlich lange andauernden Wärmekontakts ergeben. Erfindungsgemäß ist daher vorgesehen, dass sowohl das Primärgas als auch das Sekundärgas auf 100°C bis 450°C, wenn Sekundärgas verwendet wird, vorgewärmt sind.

Eine weitere Möglichkeit, den Zerstäubungsprozess zu beeinflussen, besteht in der Wahl der Gasflüsse des Primärgases und des Sekundärgases. Insbesondere durch unterschiedlich starke Gasflüsse lässt sich beispielsweise die Form der Tröpfchen und damit der Körner des Pulvers einstellen. Es ist daher erforderlich den Gasfluss entsprechend der gewünschten Kornform des Pulvers anzupassen.

In Fällen, in denen sowohl Primärgas als auch Sekundärgas verwendet wird, kann das Primärgas dabei als Führungsgas einen hohen (ersten) Gasfluss aufweisen, das Sekundärgas kann für den eigentlichen Zerstäubungsprozess bestimmt sein und einen gegenüber dem Primärgas geringeren (zweiten) Gasfluss aufweisen. Erfindungsgemäß ist es daher vorgesehen, dass der zweite Gasfluss geringer als der erste Gasfluss ist.

Selbstverständlich ist nicht ausgeschlossen, dass das Sekundärgas einen höheren Gasfluss als das Primärgas hat.

Wie bereits festgehalten, ist eine definierte Größenverteilung der Körner für die Anwendbarkeit des Pulvers in der Additiven Fertigung, insbesondere in der Flugzeug- und Automobilindustrie und anderen Branchen entscheidend. Um die Größenverteilung der Pulverkörner noch besser zu definieren bzw. einzuschränken, ist daher ein weiterer Verfahrensschritt zur Unterteilung der Pulverkörner in Grobgut und Feingut vorgesehen. Das Grobgut wird anschließend wiederverwertet, indem es erneut der Schmelze zugeführt wird, oder aber einer weiteren Verwendung oder Verarbeitung zugeführt.

Dabei weisen Pulverkörner des Grobguts Durchmesser von zumindest ca. 100 µm, vorzugsweise von zumindest 500 µm, auf. Für die Unterteilung wird eine Klassiereinrichtung, vorzugsweise werden Sichter und/oder Siebmaschinen, verwendet. Entsprechend ist es bei einer bevorzugten Ausführungsform des erfindungsgemäßen Verfahrens vorgesehen, dass das Pulver mittels Klassiereinrichtungen, vorzugsweise mittels eines Sichters und/oder mittels Siebmaschinen, in Grobgut und Feingut getrennt wird, um Grobgut mit einem Korndurchmesser von zumindest 100 µm zu entfernen, wobei das Grobgut wieder der Schmelze zugeführt wird.

Eine Unterteilung in Fein- und Grobgut ist erforderlich, da für die Verwendung als Werkstoff in der Additiven Fertigung besonders feine, gleichmäßig geformte Pulverkörner verwendet werden sollten.

Selbstverständlich ist nicht ausgeschlossen, dass das Grobgut der Schmelze nicht wieder zugeführt wird und einer weiteren Verwendung oder weiteren Verarbeitung zugeführt wird.

Wenn das Grobgut der Schmelze wieder zugeführt wird, so kann dies entweder mit oder ohne Vorbehandlung erfolgen, d.h., dass das Grobgut vor dem erneuten Zuführen behandelt wird. Selbstverständlich kann das Grobgut aber natürlich auch der Weiterführung in einem anderen Produktsegment zugeführt werden und muss nicht zwingend wieder der Schmelze zugeführt werden.

Es lässt sich somit eine besonders definierte bzw. scharfe Größenverteilung der Pulverkörner erzielen.

Wie bereits erwähnt, können die Pulverkörner unterschiedliche Form aufweisen. Neben der sphärischen Form, können die Pulverkörner auch eine langgestreckte Form aufweisen. Die dominierende Form kann durch Wahl der Prozessparameter, wie beispielsweise der Gasflüsse, eingestellt werden. Es ist vorzugsweise vorgesehen, dass die Form der Pulverkörner mehrheitlich sphärisch oder ellipsoid ist.

Vorzugsweise wird der Korndurchmesser bzw. der Durchmesser der Körner im Falle von nicht-sphärischen Kornformen, etwa mit einer langgestreckten Form, mittels eines Durchmessers bestimmt, der sich auf den Durchmesser einer gedachten, das jeweilige Pulverkorn umschließenden Kugel bezieht. Der Durchmesser bezeichnet diesen Falls die größte Erstreckung eines Korns in einer Richtung. Selbstverständlich kann die Korngrößenanalyse auch durch andere im Stand der Technik hinlänglich bekannte Verfahren erfolgen.

Um den Druck der Schmelze konstant zu halten, ist in einer bevorzugten Ausführungsform der Erfindung vorgesehen, dass es beim Schmelzen und Legieren unter definierten atmosphärischen Bedingungen bei einer ständigen Zugabe von Aluminium oder einer bereits bestehenden Aluminiumlegierung und des mindestens einen weiteren Metalls und einem ständigen konstanten Abfluss der entstehenden Schmelze bzw. Aluminiumlegierung kommt. Dies führt zu einer besonders regelmäßigen und damit konstanten vorteilhaften Kornbildung (Kornform und Kornverteilung) in der Aluminiumlegierungspulver kommt. Darüber hinaus wird durch das Konstanthalten des Drucks und der Temperatur die Bildung unerwünschter Nebenprodukte minimiert.

Es ist dabei vorgesehen, dass zur ständigen Kontrolle und Regulierung des Ofendrucks Mittel zur Ofendruckmessung und damit einhergehenden Ofendruckregulierung vorgesehen sind.

Das erfindungsgemäß hergestellte Pulver kann als Werkstoff in der Additiven Fertigung, insbesondere beim 3D-Druck, verwendet werden.

Die Aufgabe der Erfindung wird ebenfalls durch eine Vorrichtung nach Anspruch 7 zur Herstellung eines Metall-Pulvers einer Aluminiumlegierung zur Verwendung als Werkstoff in der Additiven Fertigung nach dem erfindungsgemäßen Verfahren gelöst, wobei in der Vorrichtung
- eine erste gasdichte Ofenkammer umfassend einen Tundish zum Legieren der Schmelze;
- eine am unteren Ende des Tundish angeordnete Sprühdüse zum Zerstäuben der Schmelze;
- mindestens eine Gasleitung für die Zufuhr von Primärgas zu der Sprühdüse; und
- ein Sprühturm zum Zerstäuben und Erstarren Lassen der Schmelze vorgesehen sind, wobei die Schmelze mittels eines Primärgases, welches einen ersten Gasfluss aufweist, zerstäubbar ist, wobei der Sprühturm weiters eine Zuführleitung für Kühlgas umfasst, um die zerstäubte Schmelze und das erstarrte Metall-Pulver der Schmelze zu kühlen, und dass die Schmelze unmittelbar vor dem Zerstäuben in den beheizten Tundish einbringbar ist, sodass die Aufheizung des Primärgases zusätzlich durch Wärmekontakt mit dem beheizten Tundish oder dessen Sprühdüse durchführbar ist.

Erfindungsgemäß ist bei der Vorrichtung eine Zufuhrschleuse vorgesehen, um weiteres Metall in die erste gasdichte Ofenkammer zum Schmelzen und Legieren zuführen zu können, wobei in Richtung des Flusses der Schmelze gesehen vor der ersten gasdichten Ofenkammer weiters eine zweite gasdichte Ofenkammer umfassend einen Schmelzofen und eine zweite Zufuhrschleuse zum Zuführen des mindestens einen weiteren Metalls, eine Zufuhröffnung für das Aluminium oder die bereits bestehende Aluminiumlegierung, sowie mindestens eine Schmelzeleitung für die Lieferung von Schmelze, die in die erste gasdichte Ofenkammer mündet, vorgesehen sind, und wobei das Primärgas auf 100°C bis 450°C vorwärmbar ist. Durch die Einbringung in einen beheizten Tundish wird eine für das Zerstäuben günstige Temperatur der Schmelze garantiert und kann entsprechend angepasst werden.

Das Zuführen von Kühlgas in den Sprühturm mittels Zuführleitung ermöglicht ein direktes Kühlen der zerstäubten Schmelze und des erstarrten Pulvers im Sprühturm, wodurch noch bessere Ergebnisse bei der Erzeugung der Metall-Pulverkörner erreicht werden.

Um zu verhindern, dass es in der zerstäubten Schmelze und im Metall-Pulver zu Oxidationen kommt, ist in einer Ausführungsform der Erfindung vorgesehen, dass der Sprühturm beim Zerstäubungs- und Erstarrungsprozess mit Kühlgas kühlbar, vorzugsweise N2, H2, CO, CO2, H2O, He, Ar, Kr, Xe oder ein Gemisch davon, kühlbar ist.

Um unerwünschte Oxidationen des Metalls bzw. der Aluminiumlegierung zu vermeiden, ist vorgesehen, dass die erste Ofenkammer gasdicht ist, um das Eintreten von Luftsauerstoff zu verhindern.

Als Ofenkammer kann jegliche im Stand der Technik bekannte und zur Ausführung der gegenständlichen Erfindung geeignete Ofenkammer verwendet werden. Die Funktionsweise einer Ofenkammer ist dem Fachmann hinlänglich bekannt, so dass hierauf nicht weiter eingegangen wird.

Als Tundish im Sinne der gegenständlichen Erfindung kann jeder im Stand der Technik bekannte Tundish, der zur Verwendung in der gegenständlichen Vorrichtung geeignet ist, herangezogen werden.

Als Sprühdüse im Sinne der gegenständlichen Erfindung kann jegliche im Stand der Technik bekannte Sprühdüse verwendet werden, die zur Verwendung als Sprühdüse zum Zerstäuben von Metallschmelzen geeignet ist, verwendet werden.

Zufuhrschleuse im Sinne der gegenständlichen Erfindung kann jegliche im Stand der Technik sein, die dazu geeignet ist, weiteres Metall zur Ofenkammer zuzuführen.

Ein Sprühturm im Sinne der gegenständlichen Erfindung ist jeder Sprühturm, der dazu geeignet ist, das Zerstäuben und Erstarren der Schmelze zu ermöglichen.

Um eine noch bessere Metalllegierung herstellen zu können, ist erfindungsgemäß vorgesehen, dass in Richtung des Flusses der Schmelze gesehen vor der ersten gasdichten Ofenkammer weiters eine zweite gasdichte Ofenkammer umfassend einen Schmelzofen und eine zweite Zufuhrschleuse zum Zuführen des mindestens einen weiteren Metalls, eine Zufuhröffnung für das Aluminium oder die bereits bestehende Aluminiumlegierung, sowie mindestens eine Schmelzeleitung für die Lieferung von Schmelze, die in die erste gasdichte Ofenkammer mündet, vorgesehen sind.

Dadurch, dass eine zweite gasdichte Ofenkammer vor der ersten gasdichten Ofenkammer vorgesehen ist, wird eine Optimierung der Legierung ermöglicht, da durch die vorgesehene Zufuhrschleuse weiter mindestens ein weiteres Metall zugegeben werden kann.

Um die Gefahr von Oxidationen noch weiter zu verringern, ist in einer Ausführungsform der Erfindung vorgesehen, dass in Richtung des Flusses der Schmelze gesehen vor der zweiten gasdichten Ofenkammer weiters eine Schleusenkammer umfassend eine Vakuumpumpe und mindestens eine Zuführleitung für Inertgas und eine Abführleitung für Gas, zum Entfernen bzw. zur Minimierung des vorhandenen Luftsauerstoffs im Metall und/oder der vorliegenden Legierung vorgesehen ist, um unerwünschte Oxidationen zu verhindern. Durch die vorgelagerte Schleusenkammer, wird es ermöglicht, vorhandenen Luftsauerstoff, der eine Oxidation des Metalls bewirken würde, vollständig zu entfernen oder auf eine gewünschte Menge zu reduzieren.

Die vorgesehene Vakuumpumpe ermöglicht ein Entfernen der vorhandenen Luft bzw. des Inertgases aus der Schleusenkammer, wodurch noch besser Oxidationen des Metalls bzw. der bestehenden Aluminiumlegierung bzw. der entstehenden Schmelze verhindert werden können.

Um die Zufuhr der Schmelze zur Sprühdüse kontrollieren zu können, ist in einer Ausführungsform der Erfindung vorgesehen, dass in der ersten Ofenkammer weiters ein Stopfenverschluss zum Verschließen der Sprühdüse vorgesehen ist.

Der Stopfenverschluss ermöglicht eine gezielte und kontrollierte Zufuhr von Schmelze zur Sprühdüse, wodurch der Zerstäubungs- und Erstarrungsprozess noch besser kontrolliert werden kann.

Um das Risiko von Oxidationen des Metalls bzw. der Aluminiumlegierung zu vermindern, ist in einer Ausführungsform der Erfindung vorgesehen, dass die Herstellung des Metall-Pulvers einer Aluminiumlegierung in einer inerten Schutzatmosphäre umfassend mindestens ein Inertgas durchführbar ist, wobei vorgesehen ist, dass Inertgas in der Schleusenkammer und/oder der ersten gasdichten Ofenkammer und/oder der zweiten gasdichten Ofenkammer zuführbar ist.

Um eine Unterteilung in Grob- und Feingut zu ermöglichen, ist in einer Ausführungsform der Erfindung vorgesehen, dass eine Klassiereinrichtung vorgesehen ist, wobei das Metall-Pulver mittels der Klassiereinrichtung, vorzugsweise mittels eines Sichters und/oder einer Siebmaschine, in Grobgut und Feingut trennbar ist, um Grobgut mit einem Korndurchmesser von zumindest 100 µm zu entfernen, wobei das Grobgut wieder der Schmelze zuführbar ist.

Ein Sichter und/oder Siebmaschinen ermöglichen die Unterteilung in Fein- und Grobgut besonders einfach und effizient. Als Sichter und/oder Siebmaschinen im Sinne der gegenständlichen Erfindung kommen jegliche im Stand der Technik bekannte in Betracht, die dazu geeignet sind.

Selbstverständlich ist jedoch nicht ausgeschlossen, dass das Grobgut nicht wieder der Schmelze zugeführt wird, sondern einer anderweitigen Weiterverarbeitung oder Weiterverwendung zugeführt wird.

Es versteht sich von selbst, dass alles was zum erfindungsgemäßen Verfahren ausgeführt worden ist, auch auf die erfindungsgemäße Vorrichtung zutrifft und umgekehrt.

### KURZE BESCHREIBUNG DER FIGUR

Die Erfindung wird nun anhand eines Ausführungsbeispiels näher erläutert. Die Zeichnung ist beispielhaft und soll den Erfindungsgedanken zwar darlegen, ihn aber keinesfalls einengen oder gar abschließend wiedergeben.

Dabei zeigt:

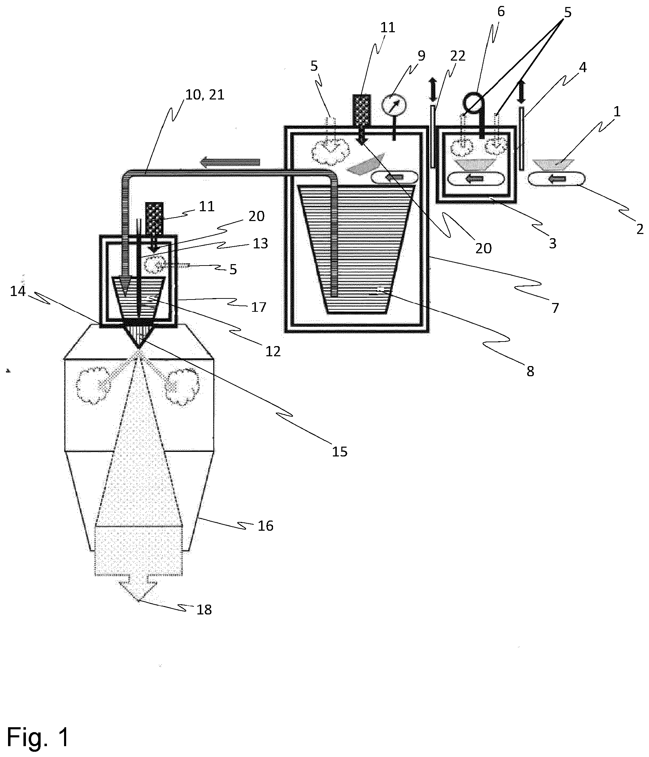

- Fig. 1: ein Gesamtfließschema eines erfindungsgemäßen Verfahrens

### WEGE ZUR AUSFÜHRUNG DER ERFINDUNG

Gemäß dem in Fig. 1 gezeigten Gesamtfließschema eines erfindungsgemäßen Verfahrens, das in einer erfindungsgemäßen Vorrichtung ausgeführt wird, wird zunächst Aluminium 1 bzw. eine bestehende Aluminiumlegierung in fester Form über einen Rollgang 2 in die Schleusenkammer 3 zugeführt. In der Schleusenkammer 3 wird mittels Vakuumpumpe 6 und Zuführen von Inertgas 5 bzw. Ausfuhr von mit Luftsauerstoff belastetem Gas eine Luftsauerstoff-freie Atmosphäre geschaffen, um bei Weiterführung des Aluminiums 1 in die zweite gasdichte Ofenkammer 7 Oxidationen zu verhindern.

Zunächst wird das erste Schleusentor 4 zum Zuführen von Aluminium 1 geöffnet und das Aluminium 1 durch das erste Schleusentor 4 in die Schleusenkammer 3 über den Rollgang 2 zugeführt. Während das erste Schleusentor 4 geöffnet ist, ist es nicht möglich das zweite Schleusentor 22, welches die Zufuhr des Aluminiums 1 in die zweite gasdichte Ofenkammer 7 ermöglicht, zu öffnen. Nach dem Zuführen des Aluminiums 1 in die Schleusenkammer 3 wird das erste Schleusentor 4 zum Zuführen wieder geschlossen. Mittels zugeführtem Inertgas 5 wird der in der Schleusenkammer 3 enthaltende Luftsauerstoff verdrängt und kann abgeführt werden. Unterstützt wird das Abführen dieses mit Luftsauerstoff-belasteten Gases durch die die Verwendung der Vakuumpumpe 6.

Sobald der vorhandene Luftsauerstoff in der Schleusenkammer 3 entfernt wurde bzw. auf ein gewünschtes Maß reduziert wurde, wird das zweite Schleusentor 22 zum Zuführen des Aluminiums 1 in die zweite gasdichte Ofenkammer 7 geöffnet. Während des Zuführens des Aluminiums in die zweite gasdichte Ofenkammer 7 ist das erste Schleusentor 4 geschlossen, um das Eindringen von Luftsauerstoff zu verhindern. Dadurch gelangt das Aluminium 1 in die zweite gasdichte Ofenkammer 7 umfassend einen Schmelz- und Legierungsofen 8. Im Schmelz- und Legierungsofen 8 der zweiten gasdichten Ofenkammer 7 wird das Aluminium 1 dann aufgeschmolzen, um eine Schmelze 21 zu erhalten.

Um zu gewährleisten, dass es auch weiterhin zu keinen Oxidationen des Aluminiums oder der bereits bestehenden Aluminiumlegierung bzw. der entstehenden Schmelze kommt, wird auch in die zweite gasdichte Ofenkammer 7 Inertgas 5 zugeführt. Durch die Zufuhrschleuse 11 wird weiteres Metall 20 in die zweite gasdichte Ofenkammer 7 und damit den Schmelz- und Legierungsofen 8 zugeführt und die gewünschte Aluminiumlegierung hergestellt.

Im gegenständlichen Beispiel wird Scandium als mindestens ein weiteres Metall 20 in die Schmelze 21 zulegiert. Die Produktreinheit des verwendeten Aluminiums 1 beträgt dabei typischerweise mindestens 95,0 Gew.-%, jene des verwendeten Scandiums typischerweise 99,0 Gew.-%.

Um eine ständige Kontrolle und Regulierung des für die Herstellung der gewünschten Schmelze 21 der Aluminiumlegierung notwendigen Drucks durchführen zu können, umfasst die zweite gasdichte Ofenkammer weiters eine Ofendruckregelung 9. Die Ofendruckregelung 9 misst ständig den vorhandenen Ofendruck in der zweiten gasdichten Ofenkammer 7. Das Einhalten des für den Legierungsprozess günstigen Drucks wird durch ein ständiges Abfließen der Schmelze 21 über eine dafür vorgesehene Schmelzeleitung 10 und ein ständiges Zuführen von Scandium 20 ermöglicht.

Durch die Zufuhr von Scandium 20 über eine Zufuhrschleuse 11 wird vor der Zufuhr in die zweite gasdichte Ofenkammer 7 ebenfalls vorhandener Luftsauerstoff entfernt. Dies ermöglicht das Beibehalten einer Luftsauerstoff-freien Atmosphäre in der zweiten gasdichten Ofenkammer 7.

Die Schmelzeleitung 10 führt von der zweiten gasdichten Ofenkammer 7 in eine erste gasdichte Ofenkammer 17, wodurch ein Überführen der Schmelze 21 von der zweiten gasdichten Ofenkammer 7 in eine erste gasdichte Ofenkammer 17 möglich ist. In Fig. 1 werden gleichzeitig sowohl die Schmelzeleitung 10 als auch die Schmelze 21 dargestellt, weswegen zum besseren Verständnis eine Darstellung mittels Pfeils gewählt wurde.

Die Schmelzeleitung 10 mündet in der ersten gasdichten Ofenkammer 17. Die erste gasdichte Ofenkammer 17 umfasst einen beheizten Tundish 12 sowie eine am unteren Ende des Tundishs 12 angeordnete Sprühdüse 15 zum Zerstäuben der Schmelze 21. Durch den beheizten Tundish 12 wird ein Aufrechterhalten der Temperatur der Schmelze ermöglicht, so dass diese mittels Sprühdüse zerstäubt werden kann.

Um zu verhindern, dass es in der ersten gasdichten Ofenkammer 17 zu Oxidationen kommt, wird auch in die erste gasdichte Ofenkammer 17 Inertgas 5 zugeführt.

Des Weiteren kann durch eine Zufuhrschleuse 11 weiter Metall 20 zugeführt werden, um die vorliegende Schmelze 21 der Aluminiumlegierung weiter zu modifizieren.

Die Schmelze 21, die üblicherweise eine Temperatur in einem Bereich von 500°C bis 1400°C, vorzugsweise 1100°C bis 1200°C, typischerweise eine Temperatur von 1150°C aufweist, wird mittels einer Pumpe (nicht dargestellt) über die Schmelzeleitung 10 dem vorgeheizten Tundish 12 zugeführt, der mittels eines Stopfenverschlusses 13 an seiner Bodenseite für die Schmelze 21 dicht verschlossen ist. Erst wenn die Schmelze 21 im vorgeheizten Tundish 12 einen gewissen Flüssigkeitsstand erreicht hat, wird der Stopfenverschluss 13 herausgezogen.

Mittels einer beheizten Sprühdüse 15, die ebenfalls an der Bodenseite des beheizten Tundish 12 angeordnet ist, wird nun die aufgrund der Schwerkraft aus dem Tundish 12 austretende Schmelze 21 zu Metalltröpfchen (nicht dargestellt), d.h. Tröpfchen der Schmelze 21, verdüst bzw. zerstäubt. Auch die Verdüsung bzw. Zerstäubung hat einen Richtungsanteil, der gemäß der Schwerkraft von oben nach unten weist, was eine besonders effiziente Erzeugung der Metalltröpfchen bewirkt.

Beim Verdüsen bzw. Zerstäuben wird vorgeheiztes Primärgas mittels einer Zuführungsleitung 14 zugeführt. Das Primärgas ist dabei auf eine Temperatur in einem Bereich von 100°C bis 450°C aufgeheizt. Es besteht die Möglichkeit auch ein Sekundärgas, welches ebenfalls auf eine Temperatur im Bereich von 100°C bis 450°C vorgeheizt wird zu verwenden. Dabei wird dann Sekundärgas über eine weitere Zuführleitung (nicht dargestellt) zugeführt. Wenn neben dem Primärgas auch ein Sekundärgas zugeführt wird, können die Temperaturen von Primärgas und Sekundärgas selbstverständlich voneinander abweichen.

Wenn sowohl Primärgas als auch Sekundärgas zum Zerstäuben der Schmelze 21 verwendet wird, liegt der Hauptunterschied zwischen dem Primärgas und dem Sekundärgas in unterschiedlichen Gasflüssen.

Um Oxidation, insbesondere an der Oberfläche der Legierungsmetalle während der Zerstäubung bzw. dem Erstarren zu Pulverkörnern zu vermeiden, kommen sowohl für das Primärgas als auch für das Sekundärgas inerte Gase, vorzugsweise N₂ und/oder H und/oder He und/oder Ne und/oder Ar und/oder Kr und/oder Xe und/oder Rn zum Einsatz.

Während des Zerstäubens erstarren die Metalltröpfchen der Schmelze 21 und bilden damit Körner eines Aluminiumlegierungspulvers. Um das Erstarren zu begünstigen, verläuft ein Materialfluss (nicht dargestellt), der während des Zerstäubens und Erstarrens erfolgt und einen Richtungsanteil senkrecht von oben nach unten aufweist, d.h. der Schwerkraft folgend ist, durch einen gekühlten Sprühturm 16. Die Kühlung des Sprühturms 16 erfolgt mittels Wasser, weshalb der Sprühturm 16 einen Doppelmantel (nicht dargestellt) und einen Wasseranschluss (nicht dargestellt) für die Wasserkühlung aufweist.

Zusätzlich erfolgt auch eine direkte Kühlung der zerstäubten Schmelze 21 bzw. der zu Pulver erstarrten Schmelze 21 durch das Zuführen von Kühlgas in Form von Stickstoff. Es daher eine Zuführleitung (nicht dargestellt) für Kühlgas in den Sprühturm 16 vorgesehen.

Durch das Kühlen mit Kühlgas wird ein schnelleres Erstarren der zerstäubten Schmelze 21 und damit eine noch bessere Erzeugung des Pulvers einer Aluminiumlegierung gewährleistet.

Am unteren Ende des Sprühturms 16 tritt das erstarrte Pulver bei einem Pulveraustrag 18 aus. Um die besonders gut definierte Größenverteilung der Körner des Pulvers zu erreichen, wird das Pulver zunächst mittels Sichter und/oder Klassiereinrichtung (nicht dargestellt) in Feingut und Grobgut unterteilt, wobei das Grobgut Korndurchmesser von mindestens 100 µm aufweist.

Das Grobgut kann dann entweder wieder der Schmelze 21 oder einer weiteren Verarbeitung oder Verwendung zugeführt werden.

### BEZUGSZEICHENLISTE

- 1: Zuführung des Aluminiums/der bestehenden Aluminiumlegierung
- 2: Rollgang
- 3: Schleusenkammer
- 4: Erstes Schleusentor
- 5: Spülgas (Inertgas)
- 6: Vakuumpumpe
- 7: Zweite gasdichte Ofenkammer
- 8: Schmelz- und Legierungsofen
- 9: Ofendruckregelung
- 10: Schmelzeleitung
- 11: Zufuhrschleuse
- 12: Tundish
- 13: Stopfenverschluss der Schmelzedüse
- 14: Zuführungsleitung des Primärgases und/oder des Sekundärgases
- 15: Sprühdüse/Düsensystem
- 16: Sprühturm
- 17: Erste gasdichte Ofenkammer
- 18: Pulveraustrag
- 19: -
- 20: Metall
- 21: Schmelze
- 22: Zweites Schleusentor

## Patentansprüche

1. Verfahren zur Herstellung eines Metall-Pulvers einer Aluminiumlegierung zur Verwendung als Werkstoff in der Additiven Fertigung, wobei das Metall-Pulver der Aluminiumlegierung hergestellt wird aus Aluminium oder aus einer bestehenden Aluminiumlegierung (1) und mindestens einem weiteren Metall (20), wobei das Herstellungsverfahren des Metall-Pulvers der Aluminiumlegierung folgende Schritte umfasst:
- Schmelzen und Legieren des Aluminiums oder der bestehenden Aluminiumlegierung (1) mit dem mindestens einen weiteren Metall (20) in einem Schmelzofen (8) in einer zweiten gasdichten Ofenkammer (7), wobei die Temperatur der Schmelze (21) 500°C bis 1400°C, vorzugsweise 1100°C bis 1200°C, besonders bevorzugt etwa 1150°C, beträgt, wobei die Schmelze (21) von der zweiten gasdichten Ofenkammer (7) in eine erste gasdichte Ofenkammer (17) umfassend einen beheizten Tundish (12) überführt wird, wobei vor dem Zerstäuben der Schmelze (21) das mindestens eine weitere Metall (20) durch eine Zufuhrschleuse (11) der Schmelze (21) in der ersten gasdichten Ofenkammer (17) und gegebenenfalls der Schmelze (21) in der zweiten gasdichten Ofenkammer (7) zugeführt wird, wobei es sich bei dem mindestens einen weiteren Metall (20) vorzugsweise um Si und/oder Mg und/oder Mn und/oder Cu und/oder Zr und/oder Sc und/oder B und/oder Nb und/oder Ta und/oder V und/oder W und/oder Li handelt;
- Zerstäuben der Schmelze (21) mittels eines Primärgases, welches ein inertes Gas ist und einen ersten Gasfluss aufweist, wobei das Primärgas auf 100°C bis 450°C vorgewärmt wird;
- Kühlen der Schmelze (21) während des Zerstäubens und Erstarrens des Metall-Pulvers, wobei ein Materialfluss während des Zerstäubens und Erstarrens in einem Sprühturm (16) verläuft, und wobei die Schmelze (21) unmittelbar vor dem Zerstäuben in den beheizten Tundish (12) eingebracht wird, wobei der Tundish (12) an einem unteren Ende eine Sprühdüse (15) sowie mindestens eine Zuführungsleitung (14) für das Primärgas aufweist, sodass die Aufheizung des Primärgases zusätzlich durch Wärmekontakt mit dem beheizten Tundish (12) oder dessen Sprühdüse (15) erfolgt.

2. Verfahren nach Anspruch 1, **dadurch gekennzeichnet, dass** das Zerstäuben der Schmelze (21) zusätzlich zum Primärgas mittels eines Sekundärgases, welches einen zweiten Gasfluss aufweist, erfolgt und wobei das Sekundärgas ein inertes Gas ist und auf 100°C bis 450°C vorgewärmt wird, wobei die Aufheizung des Sekundärgases zusätzlich durch Wärmekontakt mit dem beheizten Tundish (12) oder dessen Sprühdüse (15) erfolgt, und dass als Primärgas und als Sekundärgas ein inertes Gas vorzugsweise umfassend N₂ und/oder H und/oder He und/oder Ne und/oder Ar und/oder Kr und/oder Xe und/oder Rn verwendet wird, um Oxidation zu unterbinden.

3. Verfahren nach einem der Ansprüche 1 oder 2, **dadurch gekennzeichnet, dass** in Richtung des Flusses der Schmelze (21) gesehen vor der zweiten gasdichten Ofenkammer (7) eine Schleusenkammer (3) zur Entfernung bzw. Minimierung des vorhandenen Sauerstoffs aus dem Aluminium oder der bestehenden Aluminiumlegierung (1) vorgesehen ist, um Oxidationen während des Schmelzens und Legierens zu vermeiden, wobei vorgesehen ist, dass die Schleusenkammer (3) mit mindestens einem Inertgas (5) gespült wird.

4. Verfahren nach einem der Ansprüche 1 oder 3, **dadurch gekennzeichnet, dass** die Herstellung des Metall-Pulvers einer Aluminiumlegierung in einer inerten Schutzatmosphäre umfassend mindestens ein Inertgas erfolgt, wobei vorgesehen ist, dass Inertgas in der Schleusenkammer (3) und/oder der ersten gasdichten Ofenkammer (17) und/oder der zweiten gasdichten Ofenkammer (7) und/oder der Zufuhrschleuse (11) zugeführt wird.

5. Verfahren nach einem der Ansprüche 1 bis 4, **dadurch gekennzeichnet, dass** das Metall-Pulver mittels einer Klassiereinrichtung, vorzugsweise mittels eines Sichters und/oder Siebmaschinen, in Grobgut und Feingut getrennt wird, um Grobgut mit einem Korndurchmesser von zumindest 100 µm zu entfernen, wobei das Grobgut wieder der Schmelze (21) zugeführt wird.

6. Verfahren nach einem der Ansprüche 1 bis 5, **dadurch gekennzeichnet, dass** es beim Schmelzen und Legieren zu einer ständigen Zugabe von Aluminium oder einer bestehenden Aluminiumlegierung (1) und dem mindestens einen weiteren Metall und einem ständigen Abfluss der Schmelze kommt, um den Druck der Schmelze (21) konstant zu halten.

7. Vorrichtung zur Herstellung eines Metall-Pulvers einer Aluminiumlegierung zur Verwendung als Werkstoff in der Additiven Fertigung nach einem Verfahren nach einem der Ansprüche 1 bis 6, wobei in der Vorrichtung
- eine erste gasdichte Ofenkammer (17) umfassend einen Tundish (12) zum Legieren der Schmelze (21);
- eine am unteren Ende des Tundish (12) angeordnete Sprühdüse (15) zum Zerstäuben der Schmelze (21);
- mindestens eine Gasleitung (14) für die Zufuhr von Primärgas zu der Sprühdüse (15); und
- ein Sprühturm (16) zum Zerstäuben und Erstarren Lassen der Schmelze (21) vorgesehen sind, wobei die Schmelze (21) mittels des Primärgases, welches einen ersten Gasfluss aufweist, zerstäubbar ist, wobei der Sprühturm (16) weiters eine Zuführleitung für Kühlgas umfasst, um die zerstäubte Schmelze und das erstarrte Metall-Pulver der Schmelze zu kühlen, und wobei die Schmelze (21) unmittelbar vor dem Zerstäuben in den beheizten Tundish (12) einbringbar ist, sodass die Aufheizung des Primärgases zusätzlich durch Wärmekontakt mit dem beheizten Tundish (12) oder dessen Sprühdüse (17) durchführbar ist, **dadurch gekennzeichnet,**
**dass** eine Zufuhrschleuse (11), um weiteres Metall (20) in die erste gasdichte Ofenkammer (17) zum Schmelzen und Legieren zuführen zu können, vorgesehen ist,
**dass** in Richtung des Flusses der Schmelze (21) gesehen vor der ersten gasdichten Ofenkammer (17) weiters eine zweite gasdichte Ofenkammer (7) umfassend einen Schmelzofen (8) und eine zweite Zufuhrschleuse (11) zum Zuführen des mindestens einen weiteren Metalls (20), eine Zufuhröffnung für das Aluminium oder die bereits bestehende Aluminiumlegierung (1), sowie mindestens eine Schmelzeleitung (10) für die Lieferung von Schmelze (21), die in die erste gasdichte Ofenkammer (17) mündet, vorgesehen sind, und
**dass** das Primärgas auf 100°C bis 450°C vorwärmbar ist.

8. Vorrichtung nach Anspruch 7, **dadurch gekennzeichnet, dass** die Schmelze (21) zusätzlich zum Primärgas mittels eines Sekundärgases, welches einen zweiten Gasfluss aufweist, aus einer zweiten Gasleitung zerstäubbar ist, und wobei das Sekundärgas auf 100°C bis 450°C vorwärmbar ist und die Aufheizung des Sekundärgases zusätzlich durch Wärmekontakt mit dem beheizten Tundish (12) oder dessen Sprühdüse (17) erfolgt.

9. Vorrichtung nach Anspruch 7, **dadurch gekennzeichnet, dass** das der Sprühturm (16) beim Zerstäubungs- und Erstarrungsprozess mit Kühlgas, das Kühlgas vorzugsweise umfassend N₂, H₂, CO, CO₂, H₂O, He, Ar, Kr, Xe oder ein Gemisch davon, kühlbar ist.

10. Vorrichtung nach Anspruch 7, **dadurch gekennzeichnet, dass** in Richtung des Flusses der Schmelze (21) gesehen vor der zweiten gasdichten Ofenkammer (7) weiters eine Schleusenkammer (3) umfassend eine Vakuumpumpe (6) und mindestens eine Zuführleitung für Inertgas (5) und eine Abführleitung für Gas, zum Entfernen bzw. zur Minimierung des vorhandenen Luftsauerstoffs im Metall und/oder der vorliegenden Legierung, vorgesehen sind, um unerwünschte Oxidationen zu verhindern.

11. Vorrichtung nach Anspruch 7, **dadurch gekennzeichnet, dass** die Herstellung des Metall-Pulvers einer Aluminiumlegierung in einer inerten Schutzatmosphäre umfassend mindestens ein Inertgas (5) durchführbar ist, wobei vorgesehen ist, dass Inertgas (5) in der Schleusenkammer (3) und/oder der ersten gasdichten Ofenkammer (17) und/oder der zweiten gasdichten Ofenkammer (7) zuführbar ist.

12. Vorrichtung nach Anspruch 7, **dadurch gekennzeichnet, dass** eine Klassiereinrichtung vorgesehen ist, wobei das Metall-Pulver mittels der Klassiereinrichtung, vorzugsweise mittels eines Sichters und/oder Siebmaschinen, in Grobgut und Feingut trennbar ist, um Grobgut mit einem Korndurchmesser von zumindest 100 µm zu entfernen, wobei das Grobgut wieder der Schmelze (21) zuführbar ist.

## Claims

1. A method for producing a metal powder of an aluminium alloy for use as a material in additive manufacturing, wherein the metal powder of the aluminium alloy is produced from aluminium or from an existing aluminium alloy (1) and at least one further metal (20), wherein the production method for the metal powder of the aluminium alloy comprises the following steps:
- melting and alloying the aluminium or the existing aluminium alloy (1) with the at least one further metal (20) in a melting furnace (8) in a second gas-tight furnace chamber (7), wherein the temperature of the melt (21) is 500°C to 1400°C, preferably 1100°C to 1200°C, particularly preferably about 1150°C, wherein the melt (21) is transferred from the second gas-tight furnace chamber (7) into a first gas-tight furnace chamber (17) comprising a heated tundish (12), wherein, before the melt (21) is atomised, the at least one further metal (20) is fed through a feed lock (11) to the melt (21) in the first gas-tight furnace chamber (17) and optionally to the melt (21) in the second gas-tight furnace chamber (7), wherein the at least one further metal (20) is preferably Si and/or Mg and/or Mn and/or Cu and/or Zr and/or Sc and/or B and/or Nb and/or Ta and/or V and/or W and/or Wi;
- atomising the melt (21) by means of a primary gas which is an inert gas and has a first gas flow, wherein the primary gas is preheated to 100°C to 450°C;
- cooling the melt (21) during the atomisation and solidification of the metal powder, wherein a material flow runs in a spray tower (16) during the atomisation and solidification, and wherein the melt (21) is introduced into the heated tundish (12) immediately before the atomisation, wherein the tundish (12) has a spray nozzle (15) at a lower end as well as at least one feed line (14) for the primary gas, so that the heating of the primary gas is additionally effected by heat contact with the heated tundish (12) or its spray nozzle (15).

2. The method according to claim 1, **characterised in that** the atomisation of the melt (21) is carried out additionally to the primary gas by means of a secondary gas, which has a second gas flow, and wherein the secondary gas is an inert gas and is preheated to 100°C to 450°C, wherein the heating of the secondary gas is additionally effected by heat contact with the heated tundish (12) or its spray nozzle (15), and **in that** an inert gas, preferably comprising N₂ and/or H and/or He and/or Ne and/or Ar and/or Kr and/or Xe and/or Rn, is used as primary gas and as secondary gas in order to prevent oxidation.

3. The method according to any one of claims 1 or 2, **characterised in that,** as viewed in the direction of the flow of the melt (21), upstream of the second gas-tight furnace chamber (7) there is provided a lock chamber (3) for removing or minimising the oxygen present from the aluminium or the existing aluminium alloy (1) in order to avoid oxidation during melting and alloying, wherein it is provided that the lock chamber (3) is purged with at least one inert gas (5).

4. The method according to any one of claims 1 or 3, **characterised in that** the production of the metal powder of an aluminium alloy takes place in an inert protective atmosphere comprising at least one inert gas, wherein it is provided that inert gas is supplied in the lock chamber (3) and/or the first gas-tight furnace chamber (17) and/or the second gas-tight furnace chamber (7) and/or the feed lock (11).

5. The method according to any one of claims 1 to 4, **characterised in that** the metal powder is separated into coarse material and fine material by means of a classifying device, preferably by means of a classifier and/or screening machines, in order to remove coarse material with a grain diameter of at least 100 µm, wherein the coarse material is fed back to the melt (21).

6. The method according to any one of claims 1 to 5, **characterised in that** during melting and alloying there is a continuous addition of aluminium or an existing aluminium alloy (1) and the at least one further metal and a continuous outflow of the melt in order to keep the pressure of the melt (21) constant.

7. A device for producing a metal powder of an aluminium alloy for use as a material in additive manufacturing by a method according to any one of claims 1 to 6, wherein in the device there are provided
- a first gas-tight furnace chamber (17) comprising a tundish (12) for alloying the melt (21);
- a spray nozzle (15) arranged at the lower end of the tundish (12) for atomising the melt (21);
- at least one gas line (14) for feeding primary gas to the spray nozzle (15); and
- a spray tower (16) for atomising and solidifying the melt (21), wherein the melt (21) can be atomised by means of the primary gas, which has a first gas flow, wherein the spray tower (16) further comprises a feed line for cooling gas in order to cool the atomised melt and the solidified metal powder of the melt, and wherein the melt (21) can be introduced into a heated tundish (12) immediately before atomisation, so that the heating of the primary gas can additionally be carried out by heat contact with the heated tundish (12) or its spray nozzle (17), **characterised in that** a feed lock (11), in order to feed further metal (20) into the first gas-tight furnace chamber (17) for melting and alloying, is provided, **in that**, viewed in the direction of the flow of the melt (21), upstream of the first gas-tight furnace chamber (17) there are furthermore provided a second gas-tight furnace chamber (7) comprising a melting furnace (8) and a second feed lock (11) for feeding the at least one further metal (20), a feed opening for the aluminium or the already existing aluminium alloy (1), as well as at least one melt line (10) for the supply of melt (21), which opens out into the first gas-tight furnace chamber (17), and **in that** the primary gas is preheatable to between 100°C and 450°C.

8. The device according to claim 7, **characterised in that** the melt (21) additionally to the primary gas can be atomised by a secondary gas, which comprises a second gas flow, from a second gas line, and wherein the secondary gas is preheatable to between 100°C and 450°C, and the heating of the secondary gas is additionally effected by heat contact with the heated tundish (12) or its spray nozzle (17).

9. The device according to claim 7, **characterised in that** the spray tower (16), during the atomisation and solidification processes, can be cooled with cooling gas, the cooling gas preferably comprising N₂, H₂, CO, CO₂, H₂O, He, Ar, Kr, Xe or a mixture thereof.

10. The device according to claim 7, **characterised in that,** viewed in the direction of the flow of the melt (21), upstream of the second gas-tight furnace chamber (7) there are furthermore provided a lock chamber (3) comprising a vacuum pump (6) and at least one feed line for inert gas (5) and one discharge line for gas, for removing or for minimising the atmospheric oxygen present in the metal and/or the alloy present, in order to prevent undesirable oxidation.

11. The device according to claim 7, **characterised in that** the production of the metal powder of an aluminium alloy can be carried out in an inert protective atmosphere comprising at least one inert gas (5), wherein it is provided that inert gas (5) can be supplied in the lock chamber (3) and/or the first gas-tight furnace chamber (17) and/or the second gas-tight furnace chamber (7).

12. The device according to claim 7, **characterised in that** a classifying device is provided, wherein the metal powder can be separated into coarse material and fine material by the classifying device, preferably by a classifier and/or screening machines, in order to remove coarse material with a grain diameter of at least 100 µm, wherein the coarse material can be fed back to the melt (21).

## Revendications

1. Procédé de production d'une poudre métallique d'un alliage d'aluminium pour une utilisation en tant que matière dans une fabrication additive, dans lequel la poudre métallique de l'alliage d'aluminium est produite à partir d'aluminium ou à partir d'un alliage d'aluminium (1) existant et d'au moins un métal (20) supplémentaire, dans lequel le procédé de production de la poudre métallique de l'alliage d'aluminium comprend les étapes suivantes consistant à :
- faire fondre et allier l'aluminium ou l'alliage d'aluminium (1) existant avec l'au moins un métal (20) supplémentaire dans un four de fusion (8) dans une seconde chambre de four (7) étanche aux gaz, dans lequel la température du mélange fondu (21) est de 500 °C à 1400 °C, préférentiellement de 1100 °C à 1200 °C, particulièrement préférentiellement d'environ 1150 °C, dans lequel le mélange fondu (21) est transféré depuis la seconde chambre de four (7) étanche aux gaz dans une première chambre de four (17) étanche aux gaz comprenant un panier de coulée chauffé (12), dans lequel, avant que le mélange fondu (21) ne soit atomisé, l'au moins un métal supplémentaire (20) est introduit à travers un verrou d'introduction (11) dans le mélange fondu (21) dans la première chambre de four (17) étanche aux gaz et éventuellement dans le mélange fondu (21) dans la seconde chambre de four (7) étanche aux gaz, dans lequel l'au moins un métal (20) supplémentaire est préférentiellement Si et/ou Mg et/ou Mn et/ou Cu et/ou Zr et/ou Sc et/ou B et/ou Nb et/ou Ta et/ou V et/ou W et/ou Wi ;
- atomiser le mélange fondu (21) au moyen d'un gaz primaire qui est un gaz inerte et a un premier débit de gaz, dans lequel le gaz primaire est préchauffé entre 100 °C et 450 °C
- refroidir le mélange fondu (21) pendant l'atomisation et la solidification de la poudre métallique, dans lequel un débit de matière s'écoule dans une tour d'atomisation (16) pendant l'atomisation et la solidification, et dans lequel le mélange fondu (21) est introduit dans le panier de coulée chauffé (12) immédiatement avant l'atomisation, dans lequel le panier de coulée (12) a une buse d'atomisation (15) au niveau d'une extrémité inférieure ainsi qu'au moins une ligne d'introduction (14) pour le gaz primaire, de telle sorte que l'étape consistant à chauffer le gaz primaire est de plus effectuée par contact thermique avec le panier de coulée chauffé (12) ou sa buse d'atomisation (15).

2. Procédé selon la revendication 1, **caractérisé en ce que** l'atomisation du mélange fondu (21) est de plus mise en œuvre dans le gaz primaire au moyen d'un gaz secondaire, qui a un second débit de gaz, et dans lequel le gaz secondaire est un gaz inerte et est préchauffé entre 100 °C et 450 °C, dans lequel l'étape consistant à chauffer le gaz secondaire est de plus effectuée par contact thermique avec le panier de coulée chauffé (12) ou sa buse d'atomisation (15), et **en ce qu'**un gaz inerte, comprenant préférentiellement N₂ et/ou H et/ou He et/ou Ne et/ou Ar et/ou Kr et/ou Xe et/ou Rn, est utilisé en tant que gaz primaire et en tant que gaz secondaire afin d'empêcher l'oxydation.

3. Procédé selon l'une quelconque des revendications 1 ou 2, **caractérisé en ce que,** en vue dans la direction du débit du mélange fondu (21), en amont de la seconde chambre de four (7) étanche aux gaz, il est fourni une chambre verrouillée (3) pour retirer ou limiter au minimum l'oxygène présent de l'aluminium ou de l'alliage d'aluminium (1) existant afin d'éviter l'oxydation pendant la fusion et l'alliage, dans lequel il est fourni que la chambre verrouillée (3) est purgée par au moins un gaz inerte (5).

4. Procédé selon l'une quelconque des revendications 1 ou 3, **caractérisé en ce que** la production de la poudre métallique d'un alliage d'aluminium se déroule sous une atmosphère protectrice inerte comprenant au moins un gaz inerte, dans lequel il est fourni que le gaz inerte vient alimenter la chambre verrouillée (3) et/ou la première chambre de four (17) étanche aux gaz et/ou la seconde chambre de four (7) étanche aux gaz et/ou le verrou d'introduction (11).

5. Procédé selon l'une quelconque des revendications 1 à 4, **caractérisé en ce que** la poudre métallique est séparée en une matière grossière et une matière fine au moyen d'un dispositif de classement, préférentiellement au moyen d'un classificateur et/ou de machines de criblage, afin de retirer la matière grossière d'une granulométrie d'au moins 100 µm, dans lequel la matière grossière vient alimenter en retour le mélange fondu (21).

6. Procédé selon l'une quelconque des revendications 1 à 5, **caractérisé en ce que** pendant l'étape consistant à faire fondre et allier il se déroule une addition en continu d'aluminium ou d'un alliage d'aluminium (1) existant et de loin un métal supplémentaire et un débit sortant en continu du mélange fondu afin de maintenir constante la pression du mélange fondu (21).

7. Dispositif de production d'une poudre métallique d'un alliage d'aluminium pour une utilisation comme matière dans la fabrication additive par un procédé selon l'une quelconque des revendications 1 à 6, dans lequel dans le dispositif sont fournis
- une première chambre de four (17) étanche aux gaz comprenant un panier de coulée (12) pour allier le mélange fondu (21) ;
- une buse d'atomisation (15) agencée au niveau de l'extrémité inférieure du panier de coulée (12) pour atomiser le mélange fondu (21) ;
- au moins une ligne de gaz (14) pour introduire le gaz primaire dans la buse d'atomisation (15) ; et
- une tour d'atomisation (16) pour atomiser et solidifier le mélange fondu (21), dans lequel le mélange fondu (21) peut être atomisé au moyen du gaz primaire, qui a un premier débit de gaz, dans lequel la tour d'atomisation (16) comprend en outre une ligne d'introduction pour le gaz de refroidissement afin de refroidir le mélange fondu atomisé et la poudre métallique solidifiée du mélange fondu, et dans lequel le mélange fondu (21) peut être introduit dans un panier de coulée chauffé (12) immédiatement avant l'atomisation, de telle sorte que l'étape consistant à chauffer le gaz primaire peut être en outre mise en œuvre par contact thermique avec le panier de coulée chauffé (12) ou sa buse d'atomisation (17) **caractérisé en ce que** un verrou d'introduction (11), afin d'introduire le métal (20) supplémentaire dans la première chambre de four (17) étanche aux gaz pour l'étape consistant à faire fondre et allier, est fourni, **en ce que**, en vue dans la direction du débit du mélange fondu (21), en amont de la première chambre de four (17) étanche aux gaz, sont en outre fournis une seconde chambre de four (7) étanche aux gaz comprenant un four de fusion (8) et un second verrou d'introduction (11) pour introduire l'au moins un métal (20) supplémentaire, une ouverture d'introduction pour l'aluminium ou l'alliage d'aluminium (1) déjà existant, ainsi qu'au moins une ligne de mélange fondu (10) pour l'alimentation en mélange fondu (21) qui s'ouvre dans la première chambre de four (17) étanche aux gaz, et **en ce que** le gaz primaire peut être préchauffé entre 100 °C et 450 °C.

8. Dispositif selon la revendication 7, **caractérisé en ce que** le mélange fondu (21), en plus du gaz primaire, peut être atomisé par un gaz secondaire, qui comprend un second débit de gaz, depuis une seconde ligne de gaz, et dans lequel le gaz secondaire peut être préchauffé entre 100 °C et 450 °C, et l'étape consistant à chauffer le gaz secondaire est en outre effectuée par contact thermique avec le panier de coulée chauffé (12) ou sa buse d'atomisation (17).

9. Dispositif selon la revendication 7, **caractérisé en ce que** la tour d'atomisation (16), pendant les processus d'atomisation et de solidification, peut être refroidie par un gaz de refroidissement, le gaz de refroidissement comprenant préférentiellement N₂, H₂, CO, CO₂, H₂O, He, Ar, Kr, Xe ou un mélange de ceux-ci.

10. Dispositif selon la revendication 7, **caractérisé en ce que**, en vue dans la direction du débit du mélange fondu (21), en amont de la seconde chambre de four (7) étanche aux gaz sont en outre fournis une chambre verrouillée (3) comprenant une pompe à vide (6) et au moins une ligne d'introduction pour le gaz inerte (5) et une ligne de décharge de gaz, pour retirer ou pour limiter au minimum l'oxygène atmosphérique présent dans le métal et/ou l'alliage présent, afin d'empêcher toute oxydation non souhaitée.

11. Dispositif selon la revendication 7, **caractérisé en ce que** la production de la poudre métallique d'un alliage d'aluminium peut être mise en œuvre sous une atmosphère protectrice inerte comprenant au moins un gaz inerte (5), dans lequel il est fourni que le gaz inerte (5) peut venir alimenter la chambre verrouillée (3) et/ou la première chambre de four (17) étanche aux gaz et/ou la seconde chambre de four (7) étanche aux gaz.

12. Dispositif selon la revendication 7, **caractérisé en ce que** un dispositif de classement est fourni, dans lequel la poudre métallique peut être séparée en une matière grossière et une matière fine par le dispositif de classement, préférentiellement par un classificateur et/ou des machines de criblage, afin de retirer la matière grossière d'une granulométrie d'au moins 100 µm, dans lequel la matière grossière peut venir alimenter en retour le mélange fondu (21).
